# EUROPÄISCHE PATENTSCHRIFT

(11) **EP 1 183 981 B1**
(45) Veröffentlichungstag und Bekanntmachung des Hinweises auf die Patenterteilung: **19.09.2007**
(21) Anmeldenummer: 01119490.9
(22) Anmeldetag: 14.08.2001
(51) Int. Cl.: A47K 17/00, B65G 49/06, A47K 3/00, A47K 17/02

(54) **Handgriffvorrichtung**
Handle device
Dispositif de poignée

(30) Priorität: 30.08.2000 DE 20014971 U
(43) Veröffentlichungstag der Anmeldung: 06.03.2002
(73) Patentinhaber: Roth, Eckart, 72213 Altensteig (DE)
(72) Erfinder: Roth, Eckart, 72213 Altensteig (DE)
(74) Vertreter: Reimold, Otto

(56) Entgegenhaltungen:
- EP-A- 0 448 502
- EP-A- 0 775 462
- US-A- 2 736 904

## Beschreibung

Die Erfindung betrifft eine Handgriffvorrichtung, insbesondere als Aufstehhilfe für Personen beispielsweise im Sanitärbereich, mit einem Griffstab, an dem beidenends jeweils ein Saugkopf mit einem Saugteller und einer Betätigungseinrichtung für den Saugteller angeordnet ist, so dass der jeweilige Saugteller und mit diesem der zugehörige Saugkopf durch Betätigen der Betätigungseinrichtung an einer ebenen Fläche festsaugbar und von dieser lösbar ist.

Ältere oder behinderte Personen müssen sich insbesondere beim Aufstehen, jedoch auch beim Hinsetzen oder Stehen halten. Dies gilt vor allem im Sanitärbereich bei der Benutzung des WC, eines Waschbeckens, einer Dusche oder einer Badewanne. Hierzu werden üblicherweise feststehende Handgriffe installiert. Es sind jedoch auch bereits Handgriffvorrichtungen der eingangs genannten Art auf dem Markt, die nicht unveränderbar festmontiert werden sondern im Bedarfsfall überall da eingesetzt werden können, wo ein stationär befestigter Handgriff fehlt. Voraussetzung ist lediglich, dass eine ausreichend ebene Fläche zur Verfügung steht, die im befestigten Zustand den jeweiligen Saugteller dicht abschließt

So ist beispielsweise in der EP 0 775 462 A2 eine Handgriffvorrichtung offenbart, mit einem Griffstab an dessen beiden Endbereichen jeweils ein Saugkopf befestigt ist, der mittels einer Betätigungsvorrichtung an einer ebenen Fläche festsaugbar oder von dort lösbar ist. Der Griffstab ist in seiner Länge nicht veränderlich.

In der US 2,736,904 ist eine Handgriffvorrichtung der eingangs erwähnten Art bekannt, die eine Badewannenreling beschreibt, die an den vier Ecken der Badewanne anzuordnende Saugköpfe aufweist, die über längenveränderliche Griffstäbe verbunden sind, so dass eine Anpassung der Reling an Badewannen unterschiedlicher Größe erfolgen kann.

Die in der EP 0 775 462 A2 offenbarte Handgriffvorrichtung ist auch zur Mitnahme bei Reisen bestens geeignet, da die betroffenen Personen nicht in allen Hotels oder sonstigen übers nachtungsmöglichkeiten behindertengerecht montierte stationäre Handgriffe vorfinden.

Bei der Montage der Handgriffvorrichtung an einer gefliesten Wand muss darauf geachtet werden, dass die Saugteller beider Saugköpfe jeweils ganzflächig auf einer Fliese sitzen und keine Fliesenfuge überdecken. An einer solchen Fuge würde der Saugteller nicht dicht anliegen, so dass er nicht festgesaugt werden könnte. Daher weisen die Saugteller eine mit Bezug auf die als Wandverkleidung insbesondere in Bädern und Sanitärbereichen üblichen Fliesen kleinere Gestalt auf. Allerdings ist es je nach dem Fliesenformat nicht immer möglich, dass bei in der benötigten Richtung verlaufendem Griffstab beide Saugteller auf eine Fliese gelangen. In einem solchen Falle bleibt nur die Möglichkeit, die Saugköpfe an sich beispielsweise schräg gegenüberliegenden Fliesen zu befestigen, deren Abstand voneinander dem Abstand zwischen den beiden Saugköpfen entspricht. Der Griffstab weicht dann jedoch von der an sich benötigten Ausrichtung ab.

Der vorliegenden Erfindung liegt deshalb die Aufgabe zugrunde, eine Handgriffvorrichtung der eingangs genannten Art zu schaffen, deren Ausrichtung bei der Befestigung im Rahmen der üblichen Fliesenformate unabhängig von der jeweiligen Fliesengröße gewählt werden kann und bei der eine Befestigung an winkelig zueinander stehenden Flächen möglich ist.

Diese Aufgabe wird erfindungsgemäß dadurch gelöst, dass der Abstand zwischen den beiden Saugköpfen und somit die zwischen den beiden Saugköpfen gemessene Grifflänge des Griffstabes veränderbar ist, und wobei mindestens einer der Saugköpfe um eine Schwenkachse schwenkbar am Griffstab angebracht ist.

Auf diese Weise kann der Saugkopfabstand so eingestellt werden, dass jeder Saugkopf abseits der Fugen auf eine Fliese gelangt.

Es versteht sich, dass sich der Anwendungsbereich nicht nur auf geflieste sondern auch auf andere Wände erstreckt, die insgesamt oder bereichsweise glatt sind, so zum Beispiel auf Wandflächen aus Glas, Blech oder sonstigem Material.

Ein weiterer Vorteil besteht darin, dass die erfindungsgemäße Handgriffvorrichtung zum Halten sowohl mit einer als auch mit zwei Händen geeignet ist. Um sie an eine Zweihandbedienung oder an großflächige Hände anzupassen, muss lediglich der Saugkopfabstand entsprechend vergrößert werden.

Eine weitere Verwendung besteht darin, dass die Handgriffvorrichtung dazu benutzt wird, um die für den Behinderten günstigste Griffposition zu suchen, wonach man an der ermittelten Stelle einen stationären Griff dauerhaft montiert.

Des Weiteren kann die Handgriffvorrichtung auf Reisen auch als mobiler Handtuch-, Kleider- und Krawattenhalter eingesetzt werden.

Wird die erfindungsgemäße Handgriffvorrichtung nicht benötigt, können die Saugköpfe aufeinander zu bewegt werden, so dass die Handgriffvorrichtung weniger Platz in Anspruch nimmt. Dies erleichtert ihre Mitnahme auf Reisen.

Zum Verändern des Saugkopfabstandes kann mindestens einer der Saugköpfe in Längsrichtung des Griffstabes verschiebbar an diesem gelagert sein. Alternativ hierzu oder zusätzlich ist es möglich, den Griffstab in der Länge veränderbar auszubilden. Dabei kann der in der Länge veränderbare Griffstab von teleskopartig aneinander geführten Griffstabteilen gebildet werden, wobei zweckmäßigerweise zwei Griffstabteile vorhanden sind, von denen das erste Griffstabteil eine in Längsrichtung verlaufende Teleskopausnehmung aufweist und das zweite Griffstabteil in die Teleskopausnehmung eingreift.

Bei einer bevorzugten Ausführungsform ist vorgesehen, dass die Griffstabteile eine das zweite Griffstabteil gegen ein vollständiges Herausziehen aus dem ersten Griffstabteil sichernde Ausziehsicherung bilden, so dass die beiden Griffstabteile unverlierbar miteinander verbunden sind.

Des Weiteren ist es zweckmäßig, dass die Griffstabteile relativ zueinander um die der Griffstab-Längsrichtung entsprechende Längsachse verdrehbar sind. Auf diese Weise müssen die beiden Wandbereiche, an denen die Saugköpfe befestigt werden, nicht unbedingt genau koplanar zueinander ausgerichtet sein.

Eine weitere, besonders zweckmäßige Maßnahme besteht darin, dass der mindestens eine schwenkbare Saugkopf um eine insbesondere rechtwinklig zur Griffstab-Längsrichtung gerichtete Schwenkachse schwenkbar am Griffstab angebracht ist. Eine solche Handgriffvorrichtung kann beispielsweise an zwei winklig zueinander stehenden Wänden über das Wandeck hinweg befestigt werden.

Ferner können die Saugköpfe lösbar mit dem Griffstab verbunden sein, so dass sie beim Transport weggenommen werden können

Weitere zweckmäßige Ausgestaltungen sind in den Unteransprüchen angegeben.

Ausführungsbeispiele der Erfindung werden nun anhand der Zeichnung erläutert. Es zeigen:
- Figur 1: eine geflieste Wand mit zwei auf ihr befestigten Handgriffvorrichtungen gemäß den Figuren 2 und 3 in schematischer Draufsicht,
- Figur 2: eine nicht zur Erfindung gehörende, zum Verständnis der Erfindung dienende Ausführungsform einer Handgriffvorrichtung mit feststehend am Griffstab angeordneten Saugköpfen und teleskopierbarem Griffstab in Seitenansicht, teilweise geschnitten, wobei die Saugteller mit den zugehörigen Betätigungseinrichtungen weggelassen sind,
- Figur 3: die Handgriffvorrichtung nach Figur 2 mit verlängertem Griffstab in Teildarstellung mit abgeschnittenem zweitem Griffstabteil,
- Figur 4: eine erste Ausführungsform der erfindungsgemäßen Handgriffvorrichtung mit in Längsrichtung verschiebbar am Griffstab gelagerten Saugköpfen und teleskopierbarem Griffstab in den Figuren 2 und 3 entsprechender Seitenansicht, wobei die Saugteller mit den zugehörigen Betätigungseinrichtungen der Einfachheit halber nicht eingezeichnet sind,
- Figur 5: eine zweite Ausführungsform der erfindungsgemäßen Handgriffvorrichtung mit schwenkbar am Griffstab angebrachten Saugköpfen, bei denen der jeweilige Saugteller mit zugehöriger Betätigungseinrichtung schematisch eingezeichnet ist, und teleskopierbarem Griffstab in den Figuren 2 bis 4 entsprechender Seitenansicht,
- Figur 6: die Handgriffvorrichtung nach Figur 5 mit verlängertem Griffstab und
- Figur 7: die Handgriffvorrichtung nach den Figuren 5 und 6 im an zweiwinkelig zueinander stehenden Flächen befestigten Zustand.

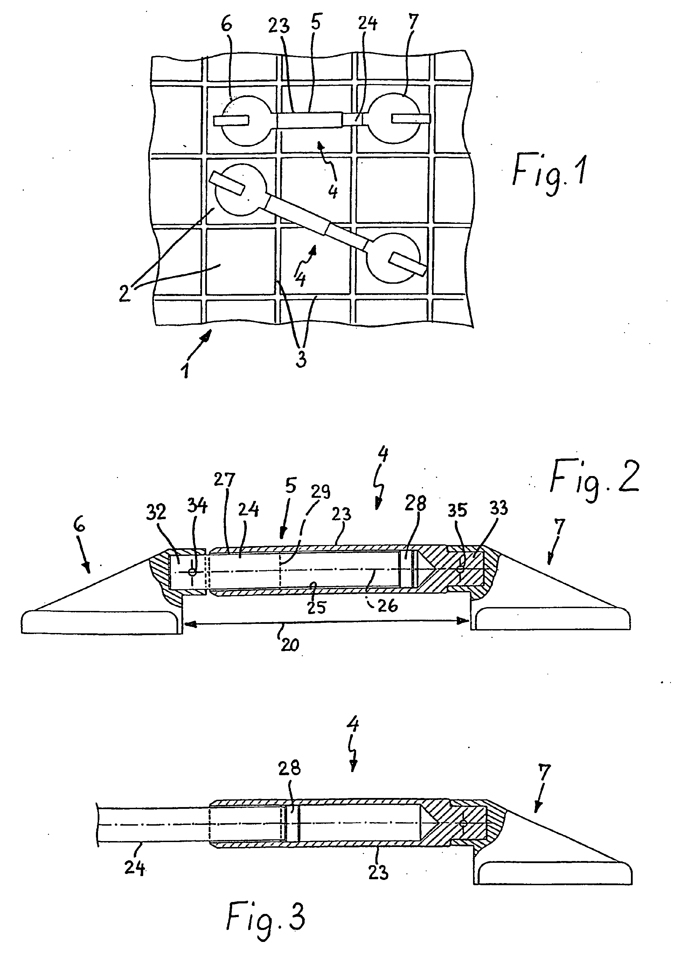

In Figur 1 ist eine geflieste Gebäudewand 1 ausschnittsweise dargestellt, deren Oberfläche von Fliesen 2 und zwischen diesen verlaufenden, mit einer Füllmasse ausgefüllten Fliesenfugen 3 gebildet wird, so dass sich ein Rechteckraster ergibt. An der Gebäudewand 1 sind zwei gleiche Handgriffvorrichtungen 4 befestigt, die der aus den Figuren 2 und 3 hervorgehenden Handgriffvorrichtung entsprechen. Dabei soll die Figur 1 lediglich die Verwendung der Handgriffvorrichtung verdeutlichen, so dass die aus ihr hervorgehenden Verhältnisse auch für die in den anderen Figuren dargestellten Handgriffvorrichtungen 4a und 4b gelten.

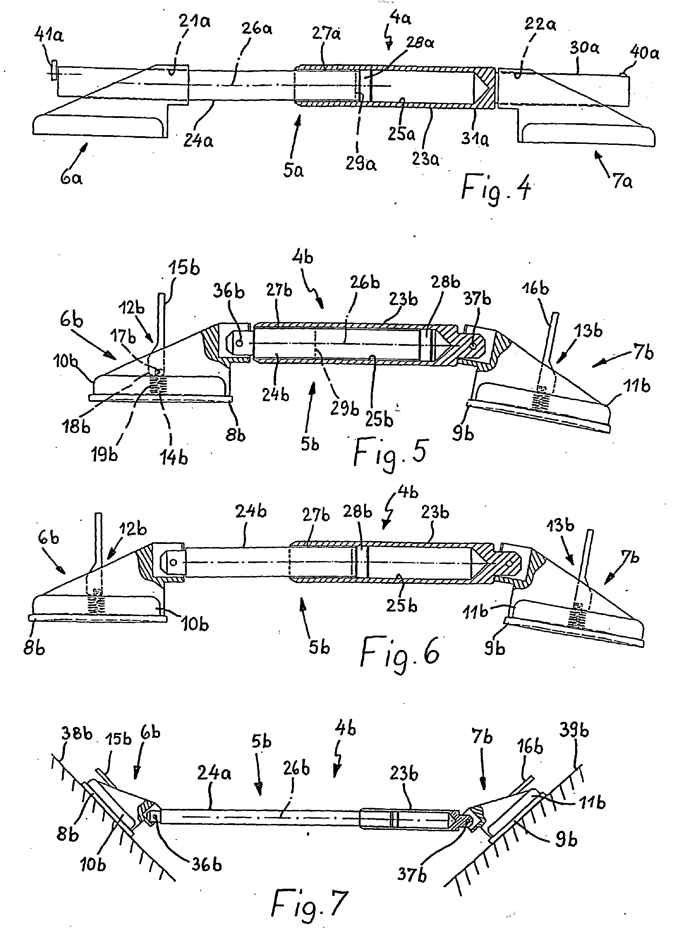

Jede Handgriffvorrichtung 4; 4a; 4b weist einen Griffstab 5; 5a; 5b auf, an dessen beiden Endbereichen jeweils ein Saugkopf 6, 7; 6a, 7a; 6b, 7b angeordnet ist, der an einer ebenen Fläche, wie sie beispielsweise von den Fliesen 2 gebildet wird, festgesaugt werden kann. Die Saugköpfe weisen jeweils einen nur bei dem Ausführungsbeispiel nach den Figuren 5 bis 7 eingezeichneten Saugteller 8b, 9b auf, der aus gummiartig flexiblem Material besteht und an der Unterseite des jeweiligen Saugkopfes 6b, 7b angeordnet ist. Dabei ragt der Saugteller 8b, 9b in radialer Richtung ringsum über das Gehäuse 10b, 11b des Saugkopfes 6b, 7b vor. Das Saugkopf-Gehäuse 10b, 11b enthält oberhalb des Saugtellers 8b, 9b einen Hohlraum, in den der mittlere Bereich des Saugtellers 8b, 9b hochgezogen werden kann. Bei diesem Hochziehen stützt sich der Außenbereich des Saugtellers 8b, 9b an der Unterseite des Saugkopf-Gehäuses 10b, 11b ab. Dem jeweiligen Saugteller 8b, 9b ist eine Betätigungseinrichtung 12b, 13b zugeordnet, mit der sich der Saugteller 8b, 9b zwischen einer unwirksamen und einer wirksamen Stellung verstellen lässt. In der unwirksamen Stellung sitzt der Saugteller 8b, 9b lose am Saugkopf-Gehäuse 10b, 11b und ist zum Saugkopf-Gehäuse 10b, 11b hin unbelastet. In der wirksamen Stellung der Betätigungseinrichtung 12b, 13b ist der Saugteller 8b, 9b dagegen zum Saugkopf-Gehäuse 10b, 11b hin hochgezogen. Dabei greift die Betätigungseinrichtung 12b, 13b im Zentrum des Saugtellers 8b, 9b an. Beim Ausführungsbeispiel enthält die Betätigungseinrichtung 12b, 13b einen am Saugteller 8b, 9b befestigten und von diesem hochstehenden Bolzen 14b (diese Bezugsziffer ist nur bei der Betätigungseinrichtung 12b eingetragen), der den oberhalb des Saugtellers.iangeordneten Hohlraum des Saugkopf-Gehäuses 10b, 11b durchgreift und an der dem Saugteller 8b, 9b entgegengesetzten Oberseite aus dem Saugkopf-Gehäuse 10b, 11b ragt, wo am Bolzen 14b ein Betätigungshebel 15b, 16b angelenkt ist, der im Bereich der Anlenkachse 17b eine Exzenterpartie 18b aufweist, die sich an der Oberseite des Saugkopf-Gehäuses 10b, 11b abstützt. In der aus den Figuren 5 und 6 hervorgehenden unwirksamen Stellung liegt der der Anlenkachse 17b nähere Bereich der Exzenterpartie 18b an der Oberseite des Saugkopf-Gehäuses 10b, 11b an, so dass der Saugteller 8b, 9b entlastet ist. Verschwenkt man den Betätigungshebel 15b, 16b aus der unwirksamen Stellung in die aus Figur 7 hervorgehende wirksame Stellung, liegt der der Anlenkachse 17b entferntere Bereich der Exzenterpartie 18b auf der Oberseite des Saugkopf-Gehäuses 10b, 11b und stützt sich dort ab, so dass der Saugteller 8b, 9b seine hochgezogene Stellung einnimmt. Am Saugteller 8b, 9b greift noch eine Rückholfeder 19b an, die ihn beim Verschwenken des Betätigungshebels 15b, 16b aus der wirksamen Stellung in die unwirksame Stellung in seine Ausgangslage zurückbewegt. Die Rückholfeder 19b wird beim Ausführungsbeispiel von einer den Bolzen 14b umgreifenden Schraubenfeder gebildet, die sich mit ihrem dem Saugteller 8b, 9b entgegengesetzten Ende innen im Saugkopf-Gehäuse 10b, 11b abstützt.

Es versteht sich, dass sich die Exzenterpartie 18b nicht unmittelbar auf der Oberseite des Saugkopf-Gehäuses 10b, 11b abstützen muss, sondern dass zwischen ihr und dem Saugkopf-Gehäuse 10b, 11b ein geeigneter Stützkörper beispielsweise in Gestalt einer Metallplatte angeordnet sein kann.

Beim Ansetzen des jeweiligen Saugkopfes an eine der Fliesen 2 nimmt der Betätigungshebel 15b, 16b seine unwirksame Stellung ein. Liegt der Saugkopf mit seinem Saugteller 8b, 9b an der betreffenden Fliese 2 an, wird der Betätigungshebel 15b, 16b in seine wirksame Stellung verschwenkt, so dass der mit seinem Außenbereich vom Saugkopf-Gehäuse 10b, 11b weiterhin gegen die Fliese 2 gehaltene Saugteller 8b, 9b mit seinem mittleren Bereich von der Fliese 2 weggezogen wird. Hierdurch entsteht zwischen der Fliese 2 und dem Saugteller 8b, 9b ein Vakuum, so dass der Saugkopf an der Fliese 2 festgehalten wird. Zum Lösen des Saugkopfes von der jeweiligen Fliese 2 wird der Betätigungshebel 15b, 16b wieder in die unwirksame Stellung zurückgeschwenkt, so dass der Saugteller 8b, 9b entlastet wird. Der Saugkopf kann dann von der Fliese 2 weggenommen werden, wobei es erforderlich sein kann, den Rand des Saugtellers 8b, 9b lokal kurz anzuheben, damit Umgebungsluft unter den Saugteller gelangen kann.

Sind beide Saugköpfe an der Gebäudewand 1 festgesaugt, kann der Griffstab 5; 5a; 5b benutzt werden, so dass sich eine Person an ihm halten kann, beispielsweise wenn sie aufstehen möchte.

Die bis jetzt beschriebenen Maßnahmen sind bekannt und entsprechen den üblichen Handgriffvorrichtungen.

Bei allen Handgriffvorrichtungen 4; 4a; 4b kann der Abstand 20 zwischen den beiden Saugköpfen 6, 7; 6a, 7a; 6b, 7b und somit die zwischen den beiden Saugköpfen gemessene Grifflänge des Griffstabes 5; 5a; 5b verändert werden.

Auf diese Weise kann die Handgriffvorrichtung mit jeder gewünschten und für die jeweilige Greifsituation optimalen Ausrichtung an der Gebäudewand 1 befestigt werden, auch wenn diese, wie in Figur 1, ein Fugenraster oder dergleichen enthält. Stets kann man den Abstand 20 zwischen den Saugköpfen so einstellen, dass jeder Saugkopf ganzflächig auf einer der Fliesen 2 zu liegen kommt. Dies ist deshalb wichtig, da eine unter einem Saugteller hindurch verlaufende Fuge 3 eine undichte Stelle bedeuten würde, die das Festsaugen verhindert.

Es versteht sich, dass Sich die Handgriffvorrichtung nicht nur horizontal und schräg sondern auch vertikal anbringen lässt.

Damit der Abstand 20 verändert werden kann, ist der Griffstab 5; 5a; 5b in der Länge verstellbar ausgebildet. Bei der Handgriffvorrichtung 4a gemäß Figur 4 ist zusätzlich vorgesehen, dass mindestens ein Saugkopf, beim Ausführungsbeispiel beide Saugköpfe 6a, 7a, in Längsrichtung des Griffstabes 5a verschiebbar am Griffstab 5a gelagert ist. Hierzu können die Sangköpfe 6a, 7a eine durchgehende Lagerbohrung 21a, 22a aufweisen, die vom Griffstab 5a durchgriffen wird. Bei dieser Ausführungsform könnte man auch einen in der Länge nicht veränderbaren Griffstab verwenden. Sind beide Möglichkeiten (Längenveränderung des Griffstabes und verschiebbare Saugköpfe) verwirklicht, lässt sich der Abstand zwischen den Saug-in köpfen 6a, 7a in einem entsprechend größeren Ausmaß variieren.

Der in der Länge veränderbare Griffstab 5; 5a; 5b wird von teleskopartig aneinander geführten Griffstabteilen gebildet, wobei bei den Ausführungsbeispielen zwei Griffstabteile 23, 24; 23a, 24a; 23b, 24b vorhanden sind, von denen das erste Griffstabteil 23; 23a; 23b eine in Längsrichtung des Griffstabes verlaufende Teleskopausnehmung 25; 25a; 25b aufweist und das zweite Griffstabteil 24; 24a; 24b in die Teleskopausnehmung eingreift. An den einander entgegengesetzten Endbereichen der beiden Griffstabteile sind die Saugköpfe 6, 7; 6a, 7a; 6b, 7b angeordnet.

Die Griffstabteile 23, 24; 23a, 24a; 23b, 24 sind um die der Griffstab-Längsrichtung entsprechende Längsachslinie 26; 26a; 26b relativ zueinander verdrehbar, so dass sich die Saugköpfe in dieser Richtung an ungenau verlegte Fliesen 2 anpassen kennen. Die Teleskopausnehmung 25; 25a; 25b wird von einer im Querschnitt kreisrunden Bohrung gebildet und das zweite Griffstabteil 24; 24a; 24b weist einen entsprechend kreisrunden Querschnitt auf, so dass sich die Verdrehbarkeit von selbst ergibt.

Die beiden Griffstabteile 23, 24; 23a, 24a; 23b, 24b bilden eine das zweite Griffstabteil 24; 24a; 24b gegen ein vollständiges Herausziehen aus dem ersten Griffstabteil 23; 23a; 23b sichernde Ausziehsicherung. Hierzu weist das erste Griffstabteil 23; 23a; 23b in der Teleskopausnehmung 25; 25a; 25b einen vom zweiten Griffstabteil 24; 24a; 24b durchgriffenen Anschlagring 27; 27a; 27b, bei den Ausführungsbeispielen in Gestalt einer Hülse, auf, dem ein am zweiten Griffstabteil 24; 24a; 24b an dessen in der Teleskopausnehmung 25; 25a; 25b angeordnetem Ende sitzender Anschlagbund 28; 28a; 28b zugeordnet ist. Der Anschlagring 27; 27a; 27b weist einen mit Bezug auf die Teleskopausnehmung kleineren Innendurchmesser auf, so dass seine innere Stirnseite 29; 29a; 29b einen Anschlag für den Ringbund 28 bildet, dessen Durchmesser größer als der des zweiten Griffstabteils ist und dem Innendurchmesser der Teleskopausnehmung entspricht.

Prinzipiell könnte eine die beiden Griffstabteile in ihrer eingestellten Längslage relativ zueinander sichernde Feststelleinrichtung vorhanden sein. Dies ist in der Praxis jedoch nicht erforderlich, da ja die beiden Saugköpfe 6, 7; 6a, 7a; 6b, 7b unverrückbar fest an der Gebäudewand 1 festgesaugt werden, so dass im befestigten Zustand eine in sich unveränderbare Anordnung vorliegt.

Bei dem Ausführungsbeispiel nach Figur 4 könnte man außerdem eine die Saugköpfe 6a, 7a an den Griffstabteilen 23a, 24a in der gewünschten Längslage fixierende Fixiereinrichtung (nicht dargestellt) vorsehen. Auch dies ist jedoch nicht unbedingt erforderlich, da das erste Griffstabteil 23a in seiner Längsrichtung unterteilt ist in eine im Saugkopf 7a geführte Endpartie 30a kleineren Durchmessers und in eine die Teleskopausnehmung 25a enthaltende Partie 31a größeren Durchmessers, die zwischen den beiden Saugköpfen 6a, 7a angeordnet ist. Bei lose in den Lagerbohrungen 21a, 22a sitzenden Griffstabteilen bildet diese Partie 31a mit ihren Stirnseiten den Griffstab 5a gegen ein Herausziehen aus den Lagerbohrungen 21a, 22a sichernde Anschläge.

Bei der aus den Figuren 2 und 3 ersichtlichen, nicht zur Erfindung gehörenden Handgriffvorrichtung 4 sind die Saugköpfe 6, 7 feststehend mit den Griffstabteilen 23, 24 verbunden. Dies kann beispielsweise dadurch erfolgen, dass die beiden Griffstabteile jeweils einen endseitigen Lagerfortsatz 32, 33 aufweisen, der mit dem betreffenden Saugkopf 6, 7 zusammengesteckt und an diesem fixiert ist. Hierzu dient im dargestellten Falle ein in Querrichtung durch den betreffenden Lagerfortsatz und den zugehörigen Saugkopf gesteckter Fixierstift 34, 35.

Bei dem Ausführungsbeispiel nach den Figuren 5 bis 7 sind die beiden Saugköpfe 8b, 9b dagegen schwenkbar am Griffstab 5b angebracht. Die beiden zugehörigen Schwenkachsen 36b, 37b stehen quer zur Griffstab-Längsrichtung und werden von den Fixierstiften 34, 35 der Ausführungsform nach den Figuren 2 und 3 entsprechenden Schwenkstiften gebildet. Im Unterschied zu den Figuren 2 und 3 sind bei der Handgriffvorrichtung 4b die an den Saugköpfen vorhandenen Aufnahmen für die Enden der beiden Griffstabteile 23b, 24b dagegen so gestaltet und in Schwenkrichtung offen, dass das Verschwenken möglich ist.

Die schwenkbare Anordnung der Saugköpfen 6b, 7b ermöglicht die Befestigung der Saugköpfe an winkelig zueinander stehenden Flächen 38b, 39b, so dass der Griffstab 5b im befestigten Zustand über das von den beiden Flächen 38b, 39b gebildete Eck verläuft. Dies kann auch innerhalb einer Duschkabine erfolgen, wo der Griffstab insbesondere als Ein- und Ausstiegshilfe dienen kann.

Ein weiterer Vorteil der schwenkbaren Anbringung der Saugköpfe besteht darin, dass man sofort bemerkt, wenn einer der Saugköpfe versehentlich noch nicht an der Wand befestigt ist oder sich von dieser aus irgendeinem Grund gelöst hat.

Bei allen Ausführungsbeispielen sollte der Abstand 20 zwischen den Saugköpfen 6, 7; 6a, 7a; 6b, 7b mindestens etwa um den Durchmesser der Saugteller 8b, 9b veränderbar sein. Auf diese Weise ist es bei einem Raster von Fugen 3 stets möglich, die Saugteller abseits der Fugen anzubringen.

Eine weitere zweckmäßige Maßnahme besteht darin, dass die Saugköpfe 6, 7; 6a, 7a; 6b, 7b entfernbar an dem Griffstab 5; 5a; 5b angeordnet sein können. Die Handgriffvorrichtung lässt sich dann zerlegen, so dass sie beim Transport weniger sperrig ist. Außerdem können die Saugköpfe beim Transport an einer Stelle mitgeführt werden, an der sie gegen Beschädigungen geschützt sind.

Das Zerlegen lässt sich sehr einfach beispielsweise dadurch erreichen, dass bei der nicht zur Erfindung gehörenden Ausführungsform nach den Figuren 2 und 3 die Fixierstifte 34, 35 und bei der Ausführungsform nach den Figuren 5 bis 7 die Schwenkstifte 36b, 37b entfernbar sind. Die Stifte 34, 35; 36b, 37b können beispielsweise Gewindestifte sein. Diese Gewindestifte können nach Art einer Flügel- oder einer Rändelschraube ausgebildet sein. Bei den Stiften 34, 35; 36b, 37b kann es sich auch um selbstsichernde, entnehmbare Drehlagerstifte handeln, wobei die Drehlagerstifte auch durch eine Sicherungsschraube oder einen Sicherungsring gesichert sein können.

Im Falle der Figur 4 sind die Saugköpfe 6a, 7a verschiebbar auf dem Griffstab 5a bzw. dessen Griffstabteilen 23a, 24a gelagert, so dass sie vom Griffstab 5a weggezogen werden können. Ist die bereits erwähnte Fixiereinrichtung vorhanden, mit der der jeweilige Saugkopf 6a, 7a in seiner gewünschten Längslage fixiert werden kann, muss lediglich die Fixiereinrichtung gelöst werden.

Bei der Ausführungsform nach Figur 4 kann am einem verschiebbaren Saugkopf 6a, 7a zugewandten Endbereich des Griffstabs 5a, im dargestellten Falle am Endbereich jedes Griffstabteils 23a, 24a eine Sicherungseinrichtung 40a, 41a angeordnet sein, die zwischen einer wirksamen Stellung, in der sie den betreffenden Saugkopf gegen ein Wegziehen vom Griffstab sichert, und einer unwirksamen Stellung, in der sie ein Entfernen des Saugkopfes gestattet, verstellbar ist.

In Figur 4 ist an jedem Griffstabende eine unterschiedliche Sicherungseinrichtung angedeutet. Dabei handelt es sich bei der Sicherungseinrichtung 40a um ein der wirksamen Stellung nach außen hin vorstehendes Rastglied, das beim Abziehen des Saugkopfs 7a niedergedrückt und somit unwirksam wird. Das Rastglied kann nach außen hin federbelastet sein und beispielsweise von einer Kugel gebildet werden. Die Sicherungseinrichtung 41a wird dagegen von einem exzentrisch an der Stirnseite des Griffstabs 5a bzw. des Griffstabteils 24a verdrehbar gelagerten Exzenterelement gebildet, das in der dargestellten wirksamen Stellung radial vorsteht und in seiner unwirksamen Drehstellung nicht über den Umfang des Griffstabs 5a vorsteht. Dieses Exzenterelement kann beispielsweise von einer Schraube mit einseitig abstehendem Betätigungsgriff oder einem exzentrisch zum Schraubenschaft angeordnetem Schraubenkopf (Rechteckschraube) gebildet werden.

## Patentansprüche

1. Handgriffvorrichtung, insbesondere als Aufstehhilfe für Personen beispielsweise im Sanitärbereich, mit einem Griffstab (5a; 5b) an dem beidenends jeweils ein Saugkopf (6a, 7a; 6b, 7b) mit einem Saugteller und einer Betätigungseinrichtung (12b, 13b) für den Saugteller (8b, 9b) angeordnet ist, so dass der jeweilige Saugteller (8b, 9b) und mit diesem der zugehörige Saugkopf (6a, 7a; 6b, 7b) durch Betätigen der Betätigungseinrichtung (12b, 13b) an einer ebenen Fläche festsaugbar und von dieser lösbar ist, **dadurch gekennzeichnet, dass** der Abstand (20) zwischen den beiden Saugköpfen (6a, 7a; 6b, 7b) und somit die zwischen den beiden Saugköpfen (6a, 7a; 6b, 7b) gemessene Grifflänge des Griffstabes (5a; 5b) veränderbar ist, und wobei mindestens einer der Saugköpfe (6a, 7a; 6b, 7b) um eine Schwenkachse (26a; 36b, 37b) schwenkbar am Griffstab (5a, 5b) angebracht ist.

2. Handgriffvorrichtung nach Anspruch 1, **dadurch gekennzeichnet, dass** der Griffstab (5a; 5b) in der Länge veränderbar ist.

3. Handgriffvorrichtung nach Anspruch 1 oder 2, **dadurch gekennzeichnet, dass** mindestens einer der Saugköpfe (6a, 7a) in Längsrichtung des Griffstabs (5a) verschiebbar an diesem gelagert ist.

4. Handgriffvorrichtung nach Anspruch 2 oder 3, **dadurch gekennzeichnet, dass** die Griffstablänge bzw. die Positionen der Saugköpfe am Griffstab feststellbar sind.

5. Handgriffvorrichtung nach einem der Ansprüche 2 bis 4, **dadurch gekennzeichnet, dass** der in der Länge veränderbare Griffstab (5a; 5b) von teleskopartig aneinander geführten Griffstabteilen (23a, 24a; 23b, 24b) gebildet wird.

6. Handgriffvorrichtung nach Anspruch 5, **dadurch gekennzeichnet, dass** zwei Griffstabteile (23a, 24a; 23b, 24b) vorhanden sind, von denen das erste Griffstabteil (23a; 23b) eine in Längsrichtung verlaufende Teleskopausnehmung (25a; 25b) aufweist und das zweite Griffstabteil (24a; 24b) in die Teleskopausnehmung eingreift.

7. Handgriffvorrichtung nach Anspruch 5 oder 6, **dadurch gekennzeichnet, dass** die Griffstabteile eine das zweite Griffstabteil (24a; 24b) gegen ein vollständiges Herausziehen aus dem ersten Griffstabteil (23a; 23b) sichernde Ausziehsicherung bilden.

8. Handgriffvorrichtung nach Anspruch 7, **dadurch gekennzeichnet, dass** das erste Griffstabteil (23a; 23b) in der Teleskopausnehmung (25a; 25b) einen vom zweiten Griffstabteil (24a; 24b) durchgriffenen Anschlagring (27a; 27b) und das zweite Griffstabteil (24a; 24b) an seinem in der Teleskopausnehmung (25a; 25b) angeordneten Endbereich einen dem Anschlagring zugeordneten Anschlagbund (28a; 28b) aufweist.

9. Handgriffvorrichtung nach einem der Ansprüche 5 bis 8, **dadurch gekennzeichnet, dass** die Griffstabteile (23a, 24a) relativ zueinander um die der Griffstab-Längsrichtung entsprechende Längsachslinie (26a) verdrehbar sind.

10. Handgriffvorrichtung nach einem der Ansprüche 6 bis 9, **dadurch gekennzeichnet, dass** die Teleskopausnehmung (25a; 25b) und das zweite Griffstabteil (24a; 24b) einen kreisrunden Querschnitt aufweisen.

11. Handgriffvorrichtung nach einem der vorhergehenden Ansprüche, **dadurch gekennzeichnet, dass** die Schwenkachse (36b, 37b) rechtwinklig zur Griffstab-Längsrichtung gerichtet ist.

12. Handgriffvorrichtung nach einem der Ansprüche 1 bis 11, **dadurch gekennzeichnet, dass** der Abstand (20) zwischen den Saugköpfen (6a, 7a; 6b, 7b) mindestens etwa um den Durchmesser der Saugteller (8b, 9b) veränderbar ist.

13. Handgriffvorrichtung nach einem der Ansprüche 1 bis 12, **dadurch gekennzeichnet, dass** die Saugköpfe (6a, 7a; 6b, 7b) entfernbar am Griffstab (5a; 5b) angeordnet sind.

14. Handgriffvorrichtung nach Anspruch 13, **dadurch gekennzeichnet, dass** die Saugköpfe (6b, 7b) mit Hilfe von entfernbaren Schwenkstiften (36b, 37b) mit dem Griffstab (5b) verbunden sind.

15. Handgriffvorrichtung nach Anspruch 13, **dadurch gekennzeichnet, dass** bei einem in Längsrichtung des Griffstabes (5a) verschiebbar an diesem gelagerten Saugkopf (6a, 7a) am betreffenden Endbereich des Griffstabs (5a) eine zwischen einer wirksamen Stellung und einer unwirksamen Stellung verstellbare Sicherungseinrichtung angeordnet ist, die in ihrer wirksamen Stellung den Saugkopf (6a, 7a) am Griffstab (5a) sichert und in ihrer unwirksamen Stellung ein Wegziehen des Saugkopfes (6a, 7a) vom Griffstab (5a) gestattet.

## Claims

1. Handrail fixture, in particular as an aid to standing up for persons, for example in sanitary areas, with a grab rail (5a; 5b) to each end of which is fitted a suction head (6a, 7a; 6b; 7b) with a suction disc and an actuating device (12b, 13b) for the suction disc (8b, 9b), so that the respective suction disc (8b, 9b) and with it the associated suction head (6a, 7a; 6b; 7b) may be attached by suction to and released from a flat surface by actuating the actuating device (12b, 13b), **characterised in that** the distance (20) between the two suction heads (6a, 7a; 6b; 7b) and therefore the gripping length of the grab rail (5a; 5b) measured between the two suction heads (6a, 7a; 6b; 7b) is variable, and wherein at least one of the suction heads (6a, 7a; 6b; 7b) is attached so as to be pivotable on the grab rail (5a; 5b) around a pivot axis (26a; 36b, 37b).

2. Handrail fixture according to claim 1, **characterised in that** the grab rail (5a; 5b) is variable in length.

3. Handrail fixture according to claim 1 or 2, **characterised in that** at least one of the suction heads (6a, 7a) is slidably mounted on the grab rail (5a) in its longitudinal direction.

4. Handrail fixture according to claim 2 or 3, **characterised in that** the grab rail length and the positions of the suction heads on the grab rail may be fixed.

5. Handrail fixture according to any of claims 2 to 4, **characterised in that** the grab rail (5a; 5b) which is variable in length is formed by grab rail sections (23a, 24a; 23b, 24b) guided so as to telescope into one another.

6. Handrail fixture according to claim 5, **characterised in that** there are two grab rail sections (23a, 24a; 23b, 24b), with the first grab rail section (23a; 23b) having a telescopic recess (25a; 25b) running in the longitudinal direction, and the second grab rail section (24a; 24b) engaging in the telescopic recess.

7. Handrail fixture according to claim 5 or 6, **characterised in that** the grab rail sections form a safety device preventing the second grab rail section (24a; 24b) from being pulled completely out of the first grab rail section (23a; 23b).

8. Handrail fixture according to claim 7, **characterised in that** the first grab rail section (23a; 23b) has in the telescopic recess (25a; 25b) a stop ring (27a; 27b) through which the second grab rail section (24a; 24b) passes, and the second grab rail section (24a; 24b) has a stop collar (28a; 28b) assigned to the stop ring at its end section located in the telescopic recess (25a; 25b).

9. Handrail fixture according to any of claims 5 to 8, **characterised in that** the grab rail sections (23a, 24a) may be rotated relative to one another around the longitudinal axis (26a) corresponding to the longitudinal direction of the grab rail.

10. Handrail fixture according to any of claims 6 to 9, **characterised in that** the telescopic recess (25a; 25b) and the second grab rail section (24a; 24b) have a circular cross-section.

11. Handrail fixture according to any of the preceding claims, **characterised in that** the pivot axis (36b, 37b) is aligned at right-angles to the longitudinal direction of the grab rail.

12. Handrail fixture according to any of claims 1 to 11, **characterised in that** the distance (20) between the suction heads (6a, 7a; 6b; 7b) may be varied by at least approximately the diameter of the suction discs (8b, 9b).

13. Handrail fixture according to any of claims 1 to 12, **characterised in that** the suction heads (6a, 7a; 6b; 7b) are mounted so as to be removable from the grab rail (5a; 5b).

14. Handrail fixture according to claim 13, **characterised in that** the suction heads (6b, 7b) are connected to the grab rail (5b) with the aid of removable pivot pins (36b, 37b).

15. Handrail fixture according to claim 13 **characterised in that**, in the case of a suction head (6a, 7a) mounted slidably on the grab rail (5a) in its longitudinal direction, there is provided at the relevant end section of the grab rail (5a) a safety device adjustable between an operative position and an inoperative position which in its operative position secures the suction head (6a, 7a) to the grab rail (5a), and in its inoperative position allows the suction head (6a, 7a) to be removed from the grab rail (5a).

## Revendications

1. Dispositif formant poignée, en particulier aide au redressement de personnes, par exemple dans des sanitaires, avec une barre de saisie (5a ; 5b) aux deux extrémités de laquelle est disposée une ventouse (6a, 7a ; 6b, 7b) avec un disque de ventouse et un dispositif de manipulation (12b, 13b) pour le disque de ventouse (8b, 9b), de telle manière que chaque disque de ventouse (8b, 9b) et avec celui-ci, la ventouse correspondante (6a, 7a ; 6b, 7b), soit fixable sur une surface plane et amovible de celle-ci par actionnement du dispositif de manipulation (12b, 13b), **caractérisé en ce que** l'espacement (20) entre les deux ventouses (6a, 7a ; 6b, 7b), et donc la longueur de saisie de la barre de saisie (5a ; 5b) mesurée entre les deux ventouses (6a, 7a ; 6b, 7b), peuvent être modifiés, au moins une des ventouses (6a, 7a ; 6b, 7b) étant montée de manière à pouvoir pivoter sur la barre de saisie (5a ; 5b), autour d'un axe de pivotement (26a ; 36b ; 37b).

2. Dispositif de poignée selon la revendication 1, **caractérisé en ce que** la longueur de la barre de saisie (5a ; 5b) peut être modifiée.

3. Dispositif de poignée selon la revendication 1 ou la revendication 2, **caractérisé en ce qu'**au moins une des ventouses (6a, 7a) est montée de manière à pouvoir coulisser longitudinalement sur la barre de saisie (5a).

4. Dispositif de poignée selon la revendication 2 ou la revendication 3, **caractérisé en ce que** la longueur de la barre de saisie et les positions des ventouses sur la barre de saisie sont réglables.

5. Dispositif de poignée selon l'une des revendications 2 à 4, **caractérisé en ce que** la barre de saisie (5a ; 5b) de longueur modifiable est formée de parties de barre de saisie (23a, 24a ; 23b, 24b) guidées télescopiquement l'une sur l'autre.

6. Dispositif de poignée selon la revendication 5, **caractérisé en ce que** deux parties de barre de saisie (23a, 24a ; 23b, 24b) sont prévues, la première partie de barre de saisie (23a ; 23b) comportant un évidement télescopique (25a, 25b) s'étendant longitudinalement, la deuxième partie de barre de saisie (24a ; 24b) s'engageant dans l'évidement télescopique.

7. Dispositif de poignée selon la revendication 5 ou la revendication 6, **caractérisé en ce que** les parties de barre de saisie forment un blocage de traction empêchant la deuxième partie de barre de saisie (24a ; 24b) d'être entièrement sortie de la première partie de barre de saisie (23a ; 23b).

8. Dispositif de poignée selon la revendication 7, **caractérisé en ce que** la première partie de barre de saisie (23a ; 23b) comporte une bague de butée (27a ; 27b) enclenchée par la deuxième partie de barre de saisie (24a ; 24b) dans l'évidement télescopique (25a, 25b), et **en ce que** la deuxième partie de barre de saisie (24a ; 24b) comporte un épaulement de butée (28a ; 28b) correspondant à la bague de butée sur sa zone d'extrémité disposée dans l'évidement télescopique (25a, 25b).

9. Dispositif de poignée selon l'une des revendications 5 à 8, **caractérisé en ce que** les parties de barre de saisie (23a ; 24a) sont rotatives l'une par rapport à l'autre autour de la ligne d'axe longitudinal (26a) correspondant à la direction longitudinale de la barre de saisie.

10. Dispositif de poignée selon l'une des revendications 6 à 9, **caractérisé en ce que** l'évidement télescopique (25a ; 25b) et la deuxième partie de barre de saisie (24a ; 24b) sont de section circulaire.

11. Dispositif de poignée selon l'une des revendications précédentes, **caractérisé en ce que** l'axe de pivotement (36b, 37b) est perpendiculaire à la direction longitudinale de la barre de saisie.

12. Dispositif de poignée selon l'une des revendications 1 à 11, **caractérisé en ce que** l'espacement (20) entre les ventouses (6a, 7a ; 6b, 7b) peut être modifiée au moins sensiblement du diamètre des disques de ventouse (8b, 9b).

13. Dispositif de poignée selon l'une des revendications 1 à 12, **caractérisé en ce que** les ventouses (6a, 7a ; 6b, 7b) sont montées de manière amovible sur la barre de saisie (5a ; 5b).

14. Dispositif de poignée selon la revendication 13, **caractérisé en ce que** les ventouses (6b, 7b) sont raccordées par des goupilles pivotantes amovibles (36b, 37b) à la barre de saisie (5b).

15. Dispositif de poignée selon la revendication 13, **caractérisé en ce que** pour une ventouse (6a, 7a) montée sur la barre de saisie (5a) et coulissante en sens longitudinal de celle-ci, un dispositif de blocage réglable entre une position active et une position inactive est disposé sur la zone d'extrémité correspondante de la barre de saisie (5a), lequel bloque la ventouse (6a, 7a) sur la barre de saisie (5a) dans sa position active, et permet un retrait de la ventouse (6a, 7a) de la barre de saisie (5a) dans sa position inactive.
